# EUROPEAN PATENT SPECIFICATION

(11) **EP 3 778 818 B1**
(45) Date of publication and mention of the grant of the patent: **14.08.2024**
(21) Application number: 19775803.0
(22) Date of filing: 13.03.2019
(51) Int. Cl.: C09J 151/06, C09J 123/26, B32B 15/08, B32B 27/32, C09J 125/08, C09J 163/00, C09J 175/04, C09J 201/00, C08F 255/02, C08G 18/62, C08G 18/79, C08L 51/06, H01M 50/10, B32B 7/12, B32B 15/085, H01M 50/124

(54) **POLYOLEFIN-BASED ADHESIVE COMPOSITION**
HAFTZUSAMMENSETZUNG AUF POLYOLEFINBASIS
COMPOSITION ADHÉSIVE À BASE DE POLYOLÉFINES

(30) Priority: 30.03.2018 JP 2018068500
(43) Date of publication of application: 17.02.2021
(73) Proprietor: TOYOBO MC Corporation, Osaka-shi, Osaka 5300001 (JP)
(72) Inventor: SAKATA, Hideyuki, Takasago-shi, Hyogo 676-0082 (JP); OKANO, Shohei, Takasago-shi, Hyogo 676-0082 (JP); NAKAJIMA, Momoko, Takasago-shi, 676-0082 (JP)
(74) Representative: Vossius & Partner Patentanwälte Rechtsanwälte mbB
(86) International application number: PCT/JP2019/010256
(87) International publication number: WO 2019/188284

(56) References cited:
- EP-A1- 3 255 695
- WO-A1-2012/050182
- WO-A1-2015/111488
- WO-A1-2017/038615
- WO-A1-2018/030026
- WO-A1-2018/030026
- WO-A1-2018/221331
- JP-A- 2017 193 699
- JP-A- H11 228 927

## Description

### Technical Field

The present invention relates to an adhesive composition, a laminate, and a packaging material for a lithium-ion battery.

### Background Art

In recent years, lithium-ion batteries, which can be made ultra-thin and small, have been actively developed as batteries used in personal computers, mobile devices such as mobile phones, video cameras, satellites, and the like. As a packaging material for such lithium-ion batteries, a laminate composed of, for example, a substrate layer/a barrier layer/a sealant layer has been used; this is because it has advantages such that, unlike conventionally used metal cans, it is lightweight, and the shape of the batteries can be freely selected.

A lithium-ion battery includes, as contents of the battery, a positive electrode material and a negative electrode material; as well as an electrolyte solution in which a lithium salt is dissolved in an aprotic solvent (e.g., propylene carbonate, ethylene carbonate, dimethyl carbonate, diethyl carbonate, or ethyl methyl carbonate) or an electrolyte layer of a polymer gel impregnated with the electrolyte solution. When such a highly penetrating solvent passes through the sealant layer, the lamination strength between the barrier layer and the sealant layer is reduced, causing delamination; and finally resulting in leakage of the electrolyte solution. Moreover, although LiPF6, LiBF4, and like materials are used as lithium salts (electrolytes of the batteries), hydrolysis reaction of such a salt with moisture produces hydrofluoric acid, which corrodes the barrier layer, reducing the lamination strength. The battery packaging materials are thus required to have resistance to the electrolyte.

Furthermore, lithium-ion batteries must have resistance to harsher environments, based on the assumption that they will be used in various environments. For example, when lithium-ion batteries are used in mobile devices, the batteries are required to have liquid leakage resistance in environments at a temperature as high as 60 to 70°C; for example, in vehicles. Lithium-ion batteries are also required to have water resistance in order to prevent water from entering them, based on the assumption that they will be used in mobile phones and accidentally dropped into water.

Under such circumstances, various packaging materials for lithium-ion batteries with improved electrolyte solution resistance have been proposed (for example, see Patent Literature 1 and 2. Patent Literature 3 describes as packaging material for a power storage device in which at least a base material layer, a first adhesive layer, a metal foil layer provided with an anti-corrosion treatment layer on one surface or both surfaces thereof, a second adhesive layer or an adhesive resin layer, and a sealant layer are laminated in this order.

### Citation List

### Patent Literature

PTL 1: WO2014/123183
PTL 2: WO2017/187904
PTL 3: EP 3255695 A1

### Summary of Invention

### Technical Problem

However, the proposed packaging materials for lithium-ion batteries are still insufficient in terms of moldability and processability. Specifically, when such a packaging material is processed into a pouch shape, the adhesive layer may not be able to follow the extension of the substrates, and may peel off. Further, these materials are still insufficient in terms of heat resistance.

An object of the present invention is to provide an adhesive composition having good adhesion to a polyolefin resin substrate and a metal substrate, remarkable followability to a substrate, and excellent heat resistance and electrolyte solution resistance. Another object of the present invention is to provide a laminate comprising the adhesive composition, and a packaging material for batteries, comprising the laminate.

### Solution to Problem

The present inventors conducted extensive research to achieve the above objects, and found that an adhesive composition containing a modified polyolefin that has a sea-island structure with a thermoplastic resin is significantly effective as an adhesive. Thus, the present inventors have proposed the following invention. Specifically, the present invention includes the following.

An adhesive composition having a sea-island structure; and comprising a reaction product of an acid-modified polyolefin (A) and a curing agent (C) in a sea, and a reaction product of a thermoplastic resin (B) and the curing agent (C) in islands, wherein the percentage of islands having a particle size of 0.001 to 5 µm is 80% or more of the total number of islands per unit area of 10 µm × 10 um of the adhesive composition, determined as described below.

The acid-modified polyolefin (A) preferably has an acid value of 2 to 50 mgKOH/g.

The acid-modified polyolefin (A) comprises propylene and 1-butene as olefin components, and the molar ratio of propylene/1-butene is preferably 98 to 60/2 to 40.

The thermoplastic resin (B) is preferably a styrene-based elastomer.

The thermoplastic resin (B) preferably has an acid value of 2 to 50 mgKOH/g.

The content of the thermoplastic resin (B) is preferably 5 to 30 parts by mass, based on 100 parts by mass of the modified polyolefin (A).

The curing agent (C) is preferably an epoxy curing agent or an isocyanate curing agent.

The content of the curing agent (C) is preferably 0.5 to 40 parts by mass, based on 100 parts by mass of the acid-modified polyolefin (A).

The acid-modified polyolefin (A) preferably comprises an acid-modified polyolefin (A1) having a melting point of 50 to 155°C, and an acid-modified polyolefin (A2) having a melting point of 55 to 160°C.

The mass ratio of the acid-modified polyolefin (A1)/the acid-modified polyolefin (A2) is preferably 99 to 21/1 to 79.

A laminate comprising the adhesive composition described above laminated on at least one surface of a substrate.

The laminate in which the substrate is a polyolefin substrate or a metal substrate.

A packaging material for a lithium-ion battery, comprising the laminate as a constituent member.

### Advantageous Effects of Invention

Since the adhesive composition of the present invention comprises a reaction product of a modified polyolefin and a curing agent, and a reaction product of a thermoplastic resin and a curing agent; and has a sea-island structure, the composition has remarkable followability to a substrate. The composition is thus excellent in processing properties such as deep drawability. Moreover, the composition exhibits good adhesion and electrolyte solution resistance, as well as excellent heat resistance and pouch expansion resistance.

### Brief Description of Drawings

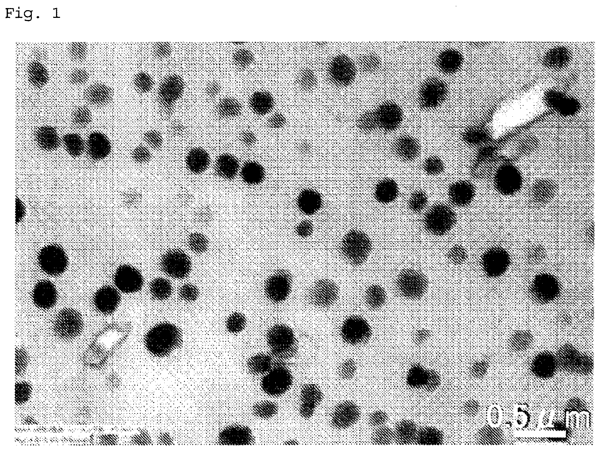

Fig. 1 is an example of a transmission electron micrograph showing the sea-island structure of the adhesive compositions of the Examples.

### Description of Embodiments

Embodiments of the present invention are described in detail below.

### Sea-Island Structure

The adhesive composition of the present invention is required to have a sea-island structure. The sea-island structure refers to a structure in which, in a mixture of two or more components, fine dispersion is exhibited without phase separation between the components. The adhesive composition of the present invention has a sea-island structure in which a reaction product of an acid-modified polyolefin (A) and a curing agent (C) is contained in a sea, and a reaction product of a thermoplastic resin (B) and the curing agent (C) is contained in islands. The formation of the sea-island structure allows fine elastomer domains to be introduced; improves the followability to deformation of a substrate during processing or during use; and increases the pouch expansion resistance. The pouch expansion resistance refers to properties such that, for example, when the adhesive composition of the present invention is used in a lithium-ion battery, even if the substrates in the lithium-ion battery are stretched under high-temperature conditions, the composition maintains adhesion and follows the stretch without peeling or breaking between the adhesion surfaces of the substrates.

The particle size of the islands phase is preferably 4 µm or less, more preferably 2 µm or less, even more preferably 1 µm or less, still even more preferably 0.5 µm or less, and most preferably 0.4 µm or less. The particle size of the islands phase is also preferably 0.003 µm or more, more preferably 0.005 um or more, even more preferably 0.01 um or more, still even more preferably 0.05 um or more, and most preferably 0.09 um or more. If the particle size of the islands is less than 0.001 µm, the effect of cavitation that occurs when a sea-island structure is provided is not sufficient, and good flexibility or followability to a substrate may not be obtained. If the particle size of the islands exceeds 5 µm, good adhesion may not be obtained, because the islands may greatly inhibit adhesion of the sea when they are present at an adhesion interface. When the shape of the islands is, for example, elliptical, the length of the major axis is measured.

In the adhesive composition of the present invention, the percentage of islands having a particle size of 0.001 to 5 um is preferably 85% or more, more preferably 90% or more, still more preferably 95% or more, and most preferably 100% of the total number of islands per unit area of 10 µm × 10 um of the adhesive composition. If the percentage is less than 85%, the adhesion may be reduced.

### Adhesive Composition

The adhesive composition of the present invention has a sea-island structure; and comprises a reaction product of the acid-modified polyolefin (A) and the curing agent (C) in a sea, and a reaction product of the thermoplastic resin (B) and the curing agent (C) in islands. The adhesive composition of the present invention can be obtained by applying a composition comprising the acid-modified polyolefin (A), the thermoplastic resin (B), and the curing agent (C) to a substrate, followed by drying and curing. The method of determining the proportions of the sea portion and the island portions in the adhesive composition of the present invention is, for example, a method using an image-processing device for a photograph of the adhesive composition; or a method in which a photograph of the adhesive composition is traced on tracing paper, the islands portions are cut out, and the weight of the paper is measured. The photograph may be, for example, a photograph obtained in the following manner. A laminate using the adhesive composition of the present invention as an adhesive layer is produced. A section is prepared from a cross-section of the adhesive layer with a cryomicrotome; and the sample is subjected to staining and carbon deposition, and photographed at 2000x using a JEM 2100 transmission electron microscope produced by JEOL Ltd. at an acceleration voltage of 200 kV.

The content of the island structure is preferably 40 parts by mass or less, more preferably 30 parts by mass or less, and even more preferably 20 parts by mass or less, per 100 parts by mass of the adhesive composition of the present invention. The content of the island structure is also preferably 0.1 parts by mass or more, more preferably 0.5 parts by mass or more, and even more preferably 1 part by mass or more. If the content is overly high, the adhesion may be reduced; whereas if the content is overly low, the pouch expansion resistance may be reduced.

The content of the reaction product of the modified polyolefin (A) and the curing agent (C) is preferably 60 parts by mass or more, more preferably 70 parts by mass or more, and even more preferably 80 parts by mass or more, per 100 parts by mass of the sea structure of the adhesive composition of the present invention. If the content is overly low, the adhesion may be reduced.

The content of the reaction product of the thermoplastic resin (B) and the curing agent (C) is preferably 70 parts by mass or more, more preferably 80 parts by mass or more, and even more preferably 90 parts by mass or more, per 100 parts by mass of the island structure of the adhesive composition of the present invention. If the content is overly low, the pouch expansion resistance may be reduced.

### Acid-modified Polyolefin (A)

The acid-modified polyolefin (A) (hereinafter also "modified polyolefin (A) " used in the present invention is not limited, and is preferably one obtained by modifying at least one of polyethylene, polypropylene, and a propylene-α-olefin copolymer. Moreover, modified polyolefins (A1) and (A2) are more preferably those obtained by modifying polypropylene or a propylene-α-olefin copolymer.

The propylene-α-olefin copolymer mainly comprises propylene that is copolymerized with an α-olefin. Examples of α-olefins include ethylene, propylene, 1-butene, 1-heptene, 1-octene, 4-methyl-1-pentene, vinyl acetate, and the like. These can be used singly, or in a combination of two or more. Among these α-olefins, ethylene and 1-butene are preferable, and 1-butene is most preferable. The molar ratio of the propylene component/the α-olefin component in the propylene-α-olefin copolymer is preferably 99 to 40/1 to 60, more preferably 98 to 45/2 to 55, and even more preferably 94 to 60/6 to 40. The total amount of the propylene component and the 1-butene component in the propylene-α-olefin copolymer is preferably 72 mol% or more, more preferably 80 mol% or more, even more preferably 90 mol% or more, and most preferably 100 mol%. Moreover, the molar ratio of propylene/1-butene is preferably 99 to 60/1 to 40, and preferably 98 to 65/2 to 35. The ethylene content in the propylene-α-olefin copolymer is preferably low.

The modified polyolefin (A) may be a single resin, or a mixture of two or more different modified polyolefins. When two or more modified polyolefins are used in combination, it is preferable to use the modified polyolefin (A1) and the modified polyolefin (A2).

The propylene content in the modified polyolefin (A1) is preferably 28 mol% or more, more preferably 40 mol% or more, even more preferably 50 mol% or more, and particularly preferably 65 mol% or more. The propylene content in the modified polyolefin (A1) is also preferably 100 mol% or less, more preferably 98 mol% or less, and particularly preferably 90 mol% or less. The presence of propylene in an amount of 30 mol% or more contributes to good adhesion to a propylene substrate. Moreover, the modified polyolefin (A1) may contain an α-olefin component in addition to propylene.

The molar ratio of propylene/1-butene in the modified polyolefin (A1) is preferably 98 to 40/2 to 60. The molar ratio proportion of propylene is preferably 50% or more, more preferably 60% or more, and even more preferably 70% or more. When the molar ratio proportion of propylene is 40% or more, excellent adhesion to a polyolefin substrate, in particular, a polypropylene substrate, can be exhibited. The molar ratio proportion of propylene is also more preferably 95% or less, even more preferably 93% or less, and most preferably 90% or less. Further, when the molar ratio proportion of 1-butene is 2% or more, the modified polyolefin becomes flexible, which improves processing properties such as followability to a substrate. The molar ratio proportion of 1-butene is more preferably 5% or more, even more preferably 7% or more, and most preferably 10% or more. The molar ratio proportion of 1-butene is also more preferably 50% or less, even more preferably 40% or less, and most preferably 30% or less.

The propylene content in the modified polyolefin (A2) is preferably 30 mol% or more, more preferably 40 mol% or more, even more preferably 45 mol% or more, particularly preferably 60 mol% or more, and most preferably 70 mol% or more. The propylene content in the modified polyolefin (A2) is also preferably 100 mol% or less, more preferably 99 mol% or less, and particularly preferably 97 mol% or less. By the presence of propylene in an amount of 30 mol% or more, good adhesion to a propylene substrate tends to be exhibited. Moreover, the modified polyolefin (A2) may contain an α-olefin component in addition to propylene.

The molar ratio of propylene/1-butene in the modified polyolefin (A2) is preferably 99 to 45/1 to 55. The molar ratio proportion of propylene is more preferably 55% or more, even more preferably 65% or more, and still even more preferably 76% or more. When the molar ratio proportion of propylene is 45% or more, excellent adhesion to a polyolefin substrate, in particular, a polypropylene substrate, can be exhibited. The molar ratio proportion of propylene is also more preferably 97% or less, even more preferably 94% or less, and most preferably 92% or less. Further, when the molar ratio proportion of 1-butene is 1% or more, the modified polyolefin becomes flexible, which improves processing properties such as followability to a substrate. The molar ratio proportion of 1-butene is more preferably 3% or more, even more preferably 6% or more, and most preferably 8% or more. The molar ratio proportion of 1-butene is also more preferably 45% or less, even more preferably 35% or less, and most preferably 24% or less.

As noted above, the modification of the modified polyolefin (A) used in the present invention is acid-modification.
The modified polyolefins (A1) and (A2) are each
an acid-modified polyolefin.

The modified polyolefin (A) used in the present invention is preferably, but is not limited to, one obtained by grafting at least one of α,β-unsaturated carboxylic acid and acid anhydride thereof onto at least one of polyethylene, polypropylene, and a propylene-α-olefin copolymer. Examples of the at least one of α,β-unsaturated carboxylic acid and acid anhydride thereof include maleic acid, itaconic acid, citraconic acid, and acid anhydrides thereof. Among these, the acid anhydrides are preferable, and maleic anhydride is more preferable. Specific examples include maleic anhydride-modified polypropylenes, maleic anhydride-modified propylene-ethylene copolymers, maleic anhydride-modified propylene-1-butene copolymers, maleic anhydride-modified propylene-ethylene-1-butene copolymers, and the like. These modified polyolefins can be used singly, or in a combination of two or more.

The modified polyolefin (A) preferably has an acid value of 2 to 50 mgKOH/g, more preferably 3 to 45 mgKOH/g, even more preferably 5 to 40 mgKOH/g, and particularly preferably 7 to 35 mgKOH/g, in terms of adhesion to a polyolefin resin substrate and a metal substrate; and electrolyte solution resistance. An acid value within the above range increases the crosslinking density due to good compatibility with a curing agent, and improves the adhesion strength and chemical resistance (electrolyte solution resistance). When the modified polyolefin (A1) and the modified polyolefin (A2) are used in combination, it is preferable that the modified polyolefin (A1) and the modified polyolefin (A2) each have an acid value in the same range as that of the modified polyolefin (A).

The modified polyolefin (A) preferably has a melting point of 50 to 160°C. Moreover, it is more preferable that the modified polyolefin (A) comprises the modified polyolefin (A1) having a melting point of 50 to 155°C and the modified polyolefin (A2) having a melting point of 55 to 160°C, and that the modified polyolefin (A2) has a melting point higher than that of the modified polyolefin (A1). Using the modified polyolefin with a high melting point and the modified polyolefin with a low melting point in combination allows for good adhesion to a polyolefin resin substrate and a metal substrate, and good chemical resistance even if bonding is performed at a low temperature of 80°C or less, at which the effect of thermal shrinkage of a polyolefin substrate is small, and even if aging is performed at a low temperature of 40°C or less; and achieves excellent heat resistance after curing. Further, the difference between the melting point of the modified polyolefin (A1) and the melting point of the modified polyolefin (A2) is preferably 3 to 55°C, more preferably 4 to 45°C, and even more preferably 5 to 30°C. If the difference in melting point is overly large, it may be difficult to achieve all of low-temperature processability, electrolyte solution resistance, and durability under high-temperature conditions.

The melting point (Tm) of the modified polyolefin (A1) is preferably within the range of 50 to 155°C, more preferably 55 to 120°C, even more preferably 60 to 100°C, and most preferably 70 to 90°C. If the melting point is overly low, the cohesive force derived from crystals may be weak, resulting in poor adhesion and poor chemical resistance. If the melting point is overly high, the solution stability and the fluidity may be low, and operability during bonding may thus be problematic.

The melting point (Tm) of the modified polyolefin (A2) is preferably within the range of 55 to 160°C, more preferably 60 to 125°C, even more preferably 65 to 105°C, and most preferably 75 to 95°C. If the melting point is overly low, the cohesive force derived from crystals may be weak, resulting in poor adhesion and poor chemical resistance. If the melting point is overly high, the solution stability and the fluidity may be low, and operability during bonding may thus be problematic.

The melting point of the modified polyolefin (A) can be adjusted by the crystallinity of the modified polyolefin. For example, in the case of an acid-modified propylene-1-butene copolymer, the melting point can be lowered by increasing the proportion of the 1-butene component to decrease the crystallinity of the propylene polymerized portion in the copolymer.

The mass ratio of the modified polyolefin (A1)/the modified polyolefin (A2) is preferably 99 to 21/1 to 79, more preferably 75 to 25/25 to 75, and even more preferably 60 to 40/40 to 60. If the mass ratio is within the above range, all of low-temperature processability, electrolyte solution resistance, and durability under high-temperature conditions can be exhibited.

The acid value of the modified polyolefin (A) can be adjusted by the amounts of α,β-unsaturated carboxylic acid, acid anhydride of α,β-unsaturated carboxylic acid, and radical generator used.

The heat of fusion (ΔH) of the modified polyolefin (A) is preferably within the range of 1 to 60 J/g, more preferably 3 to 50 J/g, and most preferably 5 to 40 J/g. If the heat of fusion is overly low, the cohesive force derived from crystals may be weak, resulting in poor adhesion and poor chemical resistance. If the heat of fusion is overly high, the solution stability and the fluidity may be low, and operability during bonding may thus be problematic. Moreover, when the modified polyolefin (A1) and the modified polyolefin (A2) are used in combination, it is preferable that the modified polyolefin (A1) and the modified polyolefin (A2) each have a heat of fusion in the same range as that of the modified polyolefin (A).

The method for producing the modified polyolefin (A) is not particularly limited. Examples of the method include a radical grafting reaction in which a radical species is formed in a polymer serving as a main chain, and unsaturated carboxylic acid and acid anhydride are graft-polymerized using the radical species as a polymerization starting point; and the like.

Examples of radical generators include, but are not limited to, organic peroxides and azonitriles. It is preferable to use an organic peroxide. Examples of organic peroxides include, but are not limited to, peroxides, such as di-tert-butylperoxy phthalate, tert-butyl hydroperoxide, dicumyl peroxide, benzoyl peroxide, tert-butylperoxy benzoate, tert-butyl peroxy-2-ethylhexanoate, tert-butyl peroxy pivalate, methyl ethyl ketone peroxide, di-tert-butyl peroxide, and lauroyl peroxide; azonitriles, such as azobisisobutyronitrile and azobisisopropionitrile; and the like.

The weight average molecular weight (Mw) of the modified polyolefin (A) is preferably within the range of 10,000 to 200,000, more preferably 20,000 to 180,000, even more preferably 30,000 to 160,000, particularly preferably 40,000 to 140,000, and most preferably 50,000 to 110,000. If the weight average molecular weight is overly low, the cohesive force may be weak, resulting in poor adhesion. If the weight average molecular weight is overly high, the fluidity may be low, and operability during bonding may thus be problematic. A weight average molecular weight within the above range is preferable, because a curing reaction with a curing agent is utilized. Moreover, when the modified polyolefin (A1) and the modified polyolefin (A2) are used in combination, it is preferable that the modified polyolefin (A1) and the modified polyolefin (A2) each have a weight average molecular weight in the same range as that of the modified polyolefin (A).

### Thermoplastic Resin (B)

The thermoplastic resin (B) used in the present invention is not particularly limited, and a thermoplastic resin having a styrene skeleton can be used. Specific examples of styrene-based thermoplastic resins include styrene-based elastomers, such as styrene-ethylene-butylene-styrene copolymer resins, styrene-ethylene-propylene-styrene copolymer resins, styrene-butadiene copolymer resins, styrene-ethylene copolymer resins, styrene-butylene copolymer resins, styrene-ethylene-styrene copolymer resins, and styrene-butylene-styrene copolymer resins; and the like. Examples of thermoplastic resins not having a styrene skeleton include olefin-based elastomers, such as ethylene-propylene copolymer resins, ethylene-butene copolymer resins, ethylene-vinyl acetate copolymer resins, and ethylene-ethyl acrylate copolymer resins; and the like. Among these, styrene-based elastomers such as styrene-ethylene-butylene-styrene copolymer resins and styrene-ethylene-propylene-styrene are preferable in terms of compatibility with the modified polyolefin (A) and heat resistance.

The thermoplastic resin (B) may have an acid value. The thermoplastic resin (B) preferably has an acid value within the range of 2 to 50 mgKOH/g, more preferably 3 to 45 mgKOH/g, even more preferably 5 to 40 mgKOH/g, and particularly preferably 7 to 35 mgKOH/g. Moreover, when the thermoplastic resin (B) is acid-modified, the thermoplastic resin (B) is preferably maleic anhydride-modified. An acid value of the thermoplastic resin (B) within the above range improves compatibility with the modified polyolefin (A) and the curing agent (C); and increases cohesive force, adhesion, and heat resistance due to crosslinking with curing agent (C).

The amount of the thermoplastic resin (B) is preferably 3 to 60 parts by mass based on the 100 parts by mass of the modified polyolefin copolymer (A) (when the modified polyolefin (A1) and the modified polyolefin (A2) are used in combination, the total amount thereof); i.e., (B)/(A) = 3 to 60 (parts by mass)/100 (parts by mass), more preferably 8 to 40 (parts by mass)/100 (parts by mass), even more preferably 8 to 30 parts by mass/100 (parts by mass), and particularly preferably 10 to 20 (parts by mass)/100 (parts by mass). Since the amount of the thermoplastic resin (B) is within the above range, the adhesive composition has a sea-island structure and appropriate flexibility, as well as processing properties such as deep drawability and adhesion to a polyolefin substrate.

### Curing Agent (C)

Examples of the curing agent (C) used in the present invention include, but are not limited to, epoxy curing agents, isocyanate curing agents, carbodiimide-based curing agents, oxazoline-based curing agents, and the like. It is preferable to use an epoxy curing agent or an isocyanate curing agent.

The epoxy curing agent contained in the adhesive composition of the present invention is not particularly limited, and epoxy resins and compounds derived from these can be preferably used. Specific examples include glycidyl amine-type epoxy resins; glycidyl ether-type epoxy resins; glycidyl esters, such as hexahydrophthalic acid glycidyl ester and dimer acid glycidyl ester; alicyclic or aliphatic epoxides, such as 3,4-epoxycyclohexylmethyl carboxylate, epoxidized polybutadiene, and epoxidized soybean oil; and the like. These can be used singly, or in a combination of two or more.

Specific examples of glycidyl amine-type epoxy resins include, but are not limited to, glycidyl amine-based resins, such as tetraglycidyl diaminodiphenylmethane, triglycidyl para-aminophenol, tetraglycidyl bis-aminomethyl cyclohexanone, and N,N,N',N'-tetraglycidyl-m-xylenediamine. Among these, N,N,N',N'-tetraglycidyl-m-xylenediamine is preferable. These glycidyl amine-type epoxy resins can be used singly, or in a combination of two or more.

Specific examples of glycidyl ether-type epoxy resins include, but are not limited to, phenol novolac-type epoxy resins and cresol novolac-type epoxy resins. They are preferable in terms of adhesion to a metal substrate and chemical resistance. These glycidyl ether-type epoxy resins can be used singly, or in a combination of two or more.

In terms of adhesion to a metal substrate and chemical resistance, a glycidyl amine-type epoxy resin and a glycidyl ether-type epoxy resin are preferably used in combination as the epoxy curing agent. The mass ratio of the glycidyl amine-type epoxy resin/the glycidyl ether-type epoxy resin is preferably 1 to 30/99 to 70, more preferably 5 to 20/95 to 80, and even more preferably 8 to 15/92 to 75.

The isocyanate curing agent contained in the adhesive composition of the present invention is not particularly limited, and diisocyanates, triisocyanates, and compounds derived from these can be preferably used. Examples include diisocyanates, such as 2,4-tolylenediisocyanate, 2,6-tolylenediisocyanate, xylylene diisocyanate, diphenylmethane diisocyanate, isophorone diisocyanate, 1,5-naphthalene diisocyanate, hexamethylene diisocyanate, bis(4-isocyanatecyclohexyl)methane, and hydrogenated diphenylmethane diisocyanate; compounds derived from the diisocyanates, such as isocyanurates, adducts, biurets, uretdiones, and allophanates of the diisocyanates, and prepolymers having isocyanate residues (low polymers obtained from a diisocyanate and a polyol); triglycidyl isocyanurate; and composites thereof. These can be used singly, or in combination of two or more.

Among these, isocyanurates of the diisocyanate compounds are preferable as the isocyanate curing agent, in terms of excellent electrolyte solution resistance.

Examples of the curing agent (C) also include carbodiimide compounds, oxazoline compounds, coupling agents, and the like in addition to the epoxy curing agents and isocyanate curing agents. Examples of carbodiimide compounds include monocarbodiimide compounds, such as dimethylcarbodiimide, diisopropylcarbodiimide, dicyclohexylcarbodiimide, t-butylisopropylcarbodiimide, diphenylcarbodiimide, and di-β-naphthylcarbodiimide; polycarbodiimide compounds that can be produced by subjecting an organic diisocyanate, such as an aliphatic diisocyanate, an aromatic diisocyanate, or alicyclic diisocyanate, to a decarboxylation condensation reaction without a solvent or in an inert solvent in the presence of a condensation catalyst; and the like. Examples of oxazoline compounds include monooxazoline compounds, such as 2-oxazoline, 2-methyl-2-oxazoline, 2-phenyl-2-oxazoline, 2,5-dimethyl-2-oxazoline, and 2,4-diphenyl-2-oxazoline; dioxazoline compounds, such as 2,2'-(1,3-phenylene)-bis(2-oxazoline), 2,2'-(1,2-ethylene)-bis(2-oxazoline), 2,2'-(1,4-butylene)-bis(2-oxazoline), and 2,2'-(1,4-phenylene)-bis(2-oxazoline); and the like. Examples of coupling agents include silane coupling agents, titanate coupling agents, and the like.

The content of the curing agent (C) in the adhesive composition of the present invention is preferably within the range of 0.5 to 40 parts by mass, more preferably 1 to 35 parts by mass, even more preferably 2 to 30 parts by mass, and particularly preferably 3 to 25 parts by mass, based on 100 parts by mass of the modified polyolefin (A). If the content is overly low, sufficient curing effects may not be obtained, resulting in poor adhesion and poor chemical resistance. If the content is overly high, the pot life properties and the adhesion may be reduced; and the followability may also be reduced, causing pinholes during molding. Furthermore, an amount of the curing agent (C) exceeding the above range is unfavorable from the viewpoint of cost. Moreover, the content of the curing agent (C) within the above range allows the composition to have a sea-island structure.

The adhesive composition of the present invention may comprises additives, such as tackifiers, plasticizers, curing accelerators, flame retardants, pigments, and antiblocking agents, in addition to the modified polyolefin (A), the thermoplastic resin (B), and the curing agent (C), as long as the performance of the present invention is not impaired.

Although there is no particular limitation, the adhesive composition of the present invention can be obtained by applying and drying a composition comprising the modified polyolefin (A), the thermoplastic resin (B), the curing agent (C), and an organic solvent. The organic solvent is not particularly limited, as long as it is a solvent for dissolving or dispersing the modified polyolefin (A), the thermoplastic resin (B), and the curing agent (C). Examples of organic solvents include low-polarity solvents, such as aliphatic hydrocarbons and alicyclic hydrocarbons; high-polarity solvents, such as alcohol-based solvents, ether-based solvents, ketone-based solvents, and ester-based solvents; and the like. It is preferable to use a low-polarity solvent and a high-polarity solvent in combination, in terms of storage stability and pot life. The content ratio of the high-polarity solvent/the low-polarity solvent is preferably 60 to 3/40 to 97 (mass ratio), more preferably 50 to 5/50 to 95, even more preferably 40 to 8/60 to 90, and most preferably 30 to 20/70 to 80.

Among the above organic solvents, cyclohexane, which is an alicyclic hydrocarbon, or the like is preferable as a low-polarity solvent; and methyl ethyl ketone, which is a ketone-based solvent, or the like is preferable as a high-polarity solvent. The amount of these organic solvents is preferably within the range of 80 to 2000 parts by mass, more preferably 90 to 1600 parts by mass, even more preferably 100 to 1200 parts by mass, and particularly preferably 110 to 800 parts by mass, based on 100 parts by mass of the total amount of the modified polyolefin (A) (when the modified polyolefin (A1) and the modified polyolefin (A2) are used in combination, the total amount thereof) and the thermoplastic resin (B). When the amount is within the above range, the solution state and pot life properties are likely to be good.

### Laminate

The laminate of the present invention comprises the adhesive composition laminated on at least one surface of a substrate. The substrate may be a polyolefin substrate or a metal substrate. The laminate may be a laminate comprising a polyolefin substrate, the adhesive composition, and a metal substrate in sequence.

The adhesive composition of the present invention preferably has a storage modulus of 1.0 × 10⁴ Pa or more, more preferably 1.0 × 10⁵ Pa or more, and even more preferably 1.0 × 10⁶ Pa or more, at 110°C. If the storage modulus is less than 1.0 × 10⁴ Pa, the composition may be unsuitable for practical use in a high-temperature environment because of poor heat resistance. The storage modulus can be measured according to the test method of JIS K7244-4 (1999) (ISO6721-4:1994) .

The adhesive composition of the present invention preferably has a tensile elongation at break of 200% or more, more preferably 250% or more, and even more preferably 300% or more, at 25°C. If the tensile elongation at break is less than 200%, the followability to a substrate may be poor. The tensile elongation at break can be measured according to the test method of JIS K7161 (2014) (ISO527).

The lamination may be performed using a known laminate production technique. Although there is no particular limitation, for example, a mixture of the modified polyolefin (A), the thermoplastic resin (B), and the curing agent (C) (hereinafter, also referred to as "the composition") may be applied to the surface of a metal substrate using a suitable coating means, such as a roll coater or a bar coater; followed by drying. After drying, a polyolefin resin substrate may be laminate-bonded to the coating surface while the layer of the composition (adhesive layer) formed on the surface of the metal substrate is in a molten state, to thus obtain a laminate. Even if the laminating temperature is as low as 80°C or less, an adhesive composition having excellent adhesion, electrolyte solution resistance, and followability to a substrate can be obtained.

The thickness of the adhesive layer formed from the adhesive composition is not particularly limited; and is preferably 0.5 to 10 µm, more preferably 0.8 to 9.5 µm, and even more preferably 1 to 9 µm.

### Polyolefin Resin Substrate

The polyolefin resin substrate may be suitably selected from previously known polyolefin resins. For example, polyethylene, polypropylene, ethylene-propylene copolymers, and the like may be used without limitation. Among these, it is preferable to use a cast polypropylene film (hereinafter, also referred to as "CPP"). The thickness thereof is not particularly limited; and is preferably 20 to 100 um, more preferably 25 to 95 µm, and even more preferably 30 to 90 µm. The polyolefin resin substrate may contain a pigment and various additives, if necessary; or may be subjected to surface treatment.

### Metal Substrate

Examples of the metal substrate include, but are not limited to, various metals, such as aluminum, copper, steel, chromium, zinc, duralumin, and die-cast metals; and alloys thereof. The metal substrate may have any shape, such as a metal foil, a rolled steel plate, a panel, a pipe, a can, or a cap. In general, an aluminum foil is preferable, in terms of processability etc. The metal substrate is generally used in the form of a sheet having a thickness of 0.01 to 10 mm, and preferably 0.02 to 5 mm, although this varies depending on the purpose of use.

The surface of such a metal substrate may be subjected to surface treatment beforehand, or may be untreated. In either case, comparable effects can be exhibited.

### Examples

Examples are given below to illustrate the present invention in more detail; however, the present invention is not limited to these Examples.

### Measurement of Acid Value

The acid value (mgKOH/g) in the present invention refers to the amount of KOH required to neutralize 1 g of acid-modified resin, and was measured in accordance with the test method of JIS K0070 (1992). Specifically, 1 g of the modified polyolefin (A) or the thermoplastic resin (B) was dissolved in 100 g of xylene adjusted at a temperature of 100°C; and then titrated with a 0.1 mol/L potassium hydroxide ethanol solution (trade name "0.1 mol/L Potassium Hydroxide Ethanolic Solution" produced by Wako Pure Chemical Industries, Ltd.), using phenolphthalein as an indicator at the same temperature. The amount of potassium hydroxide required for titration was converted into milligrams to calculate the acid number (mgKOH/g).

### Measurement of Weight Average Molecular Weight (Mw)

The weight average molecular weight in the present invention is a value measured with an Alliance e2695 gel permeation chromatograph (hereinafter referred to as "GPC"; standard substance: polystyrene resin, mobile phase: tetrahydrofuran, column: Shodex KF-806 and KF-803, column temperature: 40°C, flow rate: 1.0 ml/min, detector: photodiode array detector (wavelength 254 nm = ultraviolet light)), produced by Nihon Waters K.K.

### Measurement of Melting Point and Heat of Fusion

The melting point and heat of fusion in the present invention are values measured with a differential scanning calorimeter (hereinafter referred to as "DSC"; Q-2000 produced by TA Instruments Japan Inc.) from the top temperature and area of the melting peak when a sample was melted by heating at a rate of 10°C/min, cooled to achieve resinification, and melted again by heating.

### Analysis of Sea-Island Structure

A ultrathin section having a thickness of 200 nm was prepared from a cross-section of the adhesive layer (adhesive composition) of a produced laminate with a cryomicrotome. Subsequently, the section was stained in ruthenium tetroxide vapors, and subjected to carbon deposition to prepare a sample for transmission electron microscope observation. The sample was photographed at 2000x using a JEM 2100 transmission electron microscope produced by JEOL Ltd., at an acceleration voltage of 200 kV. In this case, a sea structure portion containing the modified polyolefin appears as a bright portion, and an island structure portion containing the thermoplastic resin appears as a dark portion. The islands present in a unit area of 10 µm × 10 µm of the adhesive composition in the photograph were observed to determine the maximum particle size and the minimum particle size of the islands. Moreover, the proportions of the sea portion and the island portions of the adhesive composition of the present invention were determined by tracing the photograph on tracing paper, cutting out the island portions, and measuring the weight of the paper.

### Evaluation of Initial Adhesion

A produced laminate was cut into a size of 100 mm × 15 mm, and the adhesion was evaluated by the T-peel test using the following criteria.

The T-peel test was performed by measuring the peel strength at a tensile rate of 50 mm/min at 25°C in accordance with the test method of ASTM-D1876-61, using a Tensilon RTM-100 produced by Orientec Corporation. The average of five test values was defined as the peel strength (N/cm) between a metal substrate and a polyolefin resin substrate.

The evaluation criteria were as follows.
A (particularly excellent in practical use): 8.0 N/cm or more
B (excellent in practical use): 7.5 N/cm or more and less than 8.0 N/cm
C (practicable): 7.0 N/cm or more and less than 7.5 N/cm
D (impracticable): less than 7.0 N/cm

### Evaluation of Electrolyte Solution Resistance at 85°C

The electrolyte solution resistance was evaluated to investigate the usability as a packaging material for a lithium-ion battery. A produced laminate was cut into a size of 100 mm × 15 mm, and immersed in an electrolyte solution (solution obtained by adding 13 g of lithium hexafluorophosphate to 100 g of ethylene carbonate/diethyl carbonate/dimethyl carbonate at a volume ratio of 1/1/1), at 85°C for 1 day. Thereafter, the laminate was removed, washed with ion-exchanged water, wiped off with a paper wiper, sufficiently dried, and cut into a size of 100 mm × 15 mm; and the electrolyte solution resistance was evaluated by the T-peel test using the following criteria.
A (particularly excellent in practical use): 8.0 N/cm or more
B (excellent in practical use): 7.5 N/cm or more and less than 8.0 N/cm
C (practicable): 7.0 N/cm or more and less than 7.5 N/cm
D (impracticable): less than 7.0 N/cm

### Evaluation of Moldability

The moldability was evaluated by the tensile elongation at break and limit molding depth (deep drawability) of a produced laminate.

### Measurement of Limit Molding Depth (Deep Drawability)

A laminate was cut into a size of 80 × 120 mm, and cold-molding was performed. Specifically, cold-molding was performed while changing the molding depth from 0.5 mm in increments of 0.5 mm under a pressing pressure of 0.4 MPa using a bulging machine (product number: TP-25C-X2) produced by Amada Co., Ltd., a mold (female mold) having an opening size of 55 mm × 35 mm, and a corresponding mold (male mold). 10 samples were used for each laminate. The deepest molding depth at which none of the 10 samples after cold-molding had creases, or pinholes or cracks in the aluminum foil was defined as the limit molding depth of the samples. The moldability of a packaging material for batteries was evaluated from the limit molding depth using the following criteria. Table 2 shows the evaluation results.

### Evaluation Criteria

A (particularly excellent in practical use): limit molding depth of 6.0 mm or more
B (excellent in practical use): limit molding depth of 4.0 mm or more and less than 6.0 mm
C (practicable): limit molding depth of 2.0 mm or more and less than 4.0 mm
D (impracticable): limit molding depth of less than 2.0 mm

### Measurement of Tensile Elongation at Break

The tensile elongation at break (Eb) at 25°C in the present invention was measured in accordance with the test method of JIS K7161 (2014). Specifically, the elongation (%) at break in tension at a rate of 50 mm/min at 25°C was measured using Tensilon RTM-100 produced by Orientec Corporation. The obtained adhesive composition was applied to a Teflon sheet with a 500 µm applicator so that the film thickness of the adhesive later after drying was 50 um. The coating surface was dried with a hot air dryer at 100°C for 1 minute. The adhesive layer was peeled off from the Teflon sheet to obtain a test piece with a film thickness of 50 µm. The test piece was cut into a size of 50 mm × 15 mm. The same method as the T-peel test was carried out, and evaluation was performed by the elongation at the time when the test piece was broken.
A (particularly excellent in practical use): 300% or more
B (excellent in practical use): 250% or more and less than 300%
C (practicable): 200% or more and less than 250%
D (impracticable): less than 200%

### Production Examples of Modified Polyolefin (A)

### Production Example 1

100 parts by mass of a propylene-1-butene copolymer (melting point: 95°C, propylene/1-butene = 85/15 (molar ratio)), 233 parts by mass of toluene, 20 parts by mass of maleic anhydride, and 5 parts by mass of di-tert-butyl peroxide were placed in a 1-L autoclave. The mixture was heated with stirring to carry out a reaction at 140°C for 1 hour. The resulting reaction mixture was cooled to 100°C, poured into a container containing 950 parts by mass of methyl ethyl ketone with stirring, and cooled to 25°C to precipitate resin. The slurry liquid containing the resin was centrifuged to separate it into an acid-modified propylene-1-butene copolymer in which maleic anhydride was graft-polymerized, and (poly)maleic anhydride and low-molecular-weight substances.

Further, the acid-modified propylene-1-butene copolymer removed by centrifugation was placed in a new container containing 2000 parts by mass of methyl ethyl ketone pre-warmed to 25°C with stirring, followed by continuous stirring for 1 hour. Thereafter, the slurry liquid was centrifuged to further separate it into an acid-modified propylene-1-butene copolymer, and (poly)maleic anhydride and low-molecular-weight substances. This operation was repeated twice for purification.

After purification, drying was performed at 70°C under reduced pressure for 5 hours; thereby obtaining a maleic anhydride-modified propylene-1-butene copolymer (A-1, acid value: 25 mgKOH/g, weight average molecular weight: 60,000, melting point: 94°C, ΔH: 61 J/g), which is a modified polyolefin.

### Production Example 2

A maleic anhydride-modified propylene-1-butene copolymer (A-2, acid value: 25 mgKOH/g, weight average molecular weight: 60,000, melting point: 80°C, ΔH: 56 J/g), which is a modified polyolefin, was obtained in the same manner as in Production Example 1, except that a propylene-1-butene copolymer (melting point: 80°C, propylene/1-butene = 80/20 (molar ratio)) was used in place of the propylene-1-butene copolymer used in Production Example 1.

### Production Example 3

A maleic anhydride-modified propylene-1-butene copolymer (A-3, acid value: 25 mgKOH/g, weight average molecular weight: 60,000, melting point: 70°C, ΔH: 56 J/g), which is a modified polyolefin, was obtained in the same manner as in Production Example 1, except that a propylene-1-butene copolymer (melting point: 70°C, propylene/1-butene = 75/25 (molar ratio)) was used in place of the propylene-1-butene copolymer used in Production Example 1; and except that the amounts of maleic anhydride and di-tert-butyl peroxide were respectively changed to 15 parts by mass and 4 parts by mass.

### Production Example 4

A maleic anhydride-modified propylene-ethylene-1-butene copolymer (A-4, acid value: 25 mgKOH/g, weight average molecular weight: 60,000, melting point: 126°C, ΔH: 73 J/g), which is a modified polyolefin, was obtained in the same manner as in Production Example 1, except that a propylene-ethylene-1-butene copolymer (melting point: 132°C, propylene/ethylene/1-butene = 94/3/3 (molar ratio)) was used in place of the propylene-1-butene copolymer used in Production Example 1.

### Production of Main Agent 1

100 parts by mass of the maleic anhydride-modified propylene-1-butene copolymer (A-1) obtained in Production Example 1 and 15 parts by mass of thermoplastic resin B-1 were placed as resins in a 500-mL four-necked flask equipped with a water-cooled reflux condenser and a stirrer. Moreover, 424 parts by mass of cyclohexane and 228 parts by mass of methyl ethyl ketone were placed as solvents in the flask. The mixture was heated to 80°C with stirring, followed by continuous stirring for 1 hour. The mixture was then cooled to obtain a main agent 1.

### Production of Main Agents 2 to 20

Main agents 2 to 20 were obtained in the same manner as the method for main agent 1, except that the amounts of the components were as shown in Tables 1-1 and 1-2.

**Table 1-1**

| | | | Main agent 1 | Main agent 2 | Main agent 3 | Main agent 4 | Main agent 5 | Main agent 6 | Main agent 7 | Main agent 8 | Main agent 9 | Main agent 10 |
|---|---|---|---|---|---|---|---|---|---|---|---|---|
| Composition | Modified polyolefin (A) | A-1 | 100 | 100 | 100 | 100 | 100 | | 50 | 50 | 50 | 50 |
| | | A-2 | | | | | | 100 | 50 | 50 | 50 | 50 |
| | | A-3 | | | | | | | | | | |
| | | A-4 | | | | | | | | | | |
| | Thermoplastic resin (B) | B-1 | 15 | | | | | 15 | 15 | | | |
| | | B-2 | | 15 | | | | | | 15 | | |
| | | B-3 | | | 15 | | | | | | 15 | |
| | | B-4 | | | | 15 | | | | | | 15 |
| | | B-5 | | | | | 15 | | | | | |
| | | B-6 | | | | | | | | | | |
| | Solvent | Cyclohexane | 424 | 424 | 424 | 424 | 424 | 424 | 424 | 424 | 424 | 424 |
| | | Methyl ethyl ketone | 228 | 228 | 228 | 228 | 228 | 228 | 228 | 228 | 228 | 228 |

**Table 1-2**

| | | | Main agent 11 | Main agent 12 | Main agent 13 | Main agent 14 | Main agent 15 | Main agent 16 | Main agent 17 | Main agent 18 | Main agent 19 | Main agent 20 |
|---|---|---|---|---|---|---|---|---|---|---|---|---|
| Composition | Modified polyolefin (A) | A-1 | 50 | 50 | 50 | 70 | 30 | 50 | | 50 | 50 | 100 |
| | | A-2 | 50 | 50 | 50 | 30 | 70 | | 50 | 50 | 50 | |
| | | A-3 | | | | | | 50 | | | | |
| | | A4 | | | | | | | 50 | | | |
| | Thermoplastic resin (B) | B-1 | | 10 | 20 | 15 | 15 | 15 | 15 | | | |
| | | B-2 | | | | | | | | | | |
| | | B-3 | | | | | | | | | | |
| | | B-4 | | | | | | | | | | |
| | | B-5 | 15 | | | | | | | | | |
| | | B-6 | | | | | | | | | 15 | 15 |
| | Solvent | Cyclohexane | 424 | 405 | 442 | 424 | 424 | 424 | 424 | 368 | 424 | 424 |
| | | Methyl ethyl ketone | 228 | 218 | 238 | 228 | 228 | 228 | 228 | 198 | 228 | 228 |

The thermoplastic resins (B) shown in Tables 1-1 and 1-2 were as follows.
B-1: Kraton (registered trademark) FG1924 (maleic anhydride-modified styrene-ethylene-butylene-styrene resin, acid value: 11 mgKOH/g) produced by Kraton Corporation
B-2: Kraton (registered trademark) FG1901 (maleic anhydride-modified styrene-ethylene-butylene-styrene resin, acid value: 19 mgKOH/g) produced by Kraton Corporation
B-3: Tuftec (registered trademark) M1911 (maleic anhydride-modified styrene-ethylene-butylene-styrene resin, acid value: 2 mgKOH/g) produced by Asahi Kasei Corp.
B-4: Tuftec (registered trademark) H1517 (styrene-ethylene-butylene-styrene resin, acid value: 0 mgKOH/g) produced by Asahi Kasei Corp.
B-5: Kraton (registered trademark) G1730 (styrene-ethylene-propylene-styrene resin, acid value: 0 mgKOH/g) produced by Kraton Corporation
B-6: Tafmer (registered trademark) DF640 (ethylene-butadiene resin, acid value: 0 mgKOH/g) produced by Mitsui Chemicals, Inc.

### Example 1

A composition containing 500 parts by mass of main agent 1, 3.8 parts by mass of curing agent C-1, and 0.5 parts by mass of curing agent C-2 was obtained. A laminate was produced using the composition in the following manner.

### Production of Laminate Comprising Metal Substrate and Polyolefin Resin Substrate

An aluminum foil (produced by Sumikei Aluminum Foil Co., Ltd., 8079-0, thickness: 40 µm) was used as a metal substrate, and a cast polypropylene film (PYLEN(registered trademark) Film-CT produced by Toyobo Co., Ltd., thickness: 40 µm) (hereinafter also referred to as "CPP") was used as a polyolefin resin substrate.

The composition containing the main agent and the curing agents was applied to the metal substrate with a bar coater so that the film thickness of the adhesive layer after drying was 3 µm. The coating surface was dried with a hot air dryer at 100°C for 5 minutes to obtain the metal substrate on which an adhesive layer having a film thickness of 3 µm was laminated. The polyolefin resin substrate was laminated on the surface of the adhesive layer at a laminating temperature of 80°C, 0.3 MPa, and 1 m/min, using a tabletop test laminator (SA-1010-S) produced by Tester Sangyo Co., Ltd.; followed by aging at 40°C and 50% RH for 5 days, thereby obtaining a laminate (polyolefin substrate/adhesive layer (adhesive composition)/metal substrate).

The adhesion, electrolyte solution resistance, and moldability of the obtained laminate were evaluated. Tables 2-1 and 2-2 show the results.

### Examples 2 to 5 and Comparative Example 4

Compositions were prepared using a main agent and curing agents as shown in Tables 2-1 and 2-2, and laminates were produced in the same manner as in Example 1. Each evaluation was performed.

In Comparative Example 1, a sea-island structure was not formed, and a homogeneous solution was obtained. In Comparative Examples 2 to 4, a separation structure separated into two layers was formed, and none of Comparative Examples 2 to 4 had a sea-island structure.

### Examples 6 to 17 and Comparative Examples 1 to 3

Laminates were produced in the same manner as in Example 1, except that the laminating temperature was 80°C, and each evaluation was performed.

### Example 18

A laminate was prepared in the same manner as in Example 5, except that curing agent C-3 (5 parts by mass) was used as a curing agent, and each evaluation was performed.

The curing agents shown in Tables 2-1 and 2-2 are as follows. C-1: jER (registered trademark) 152, produced by Mitsubishi Chemical Corporation (glycidyl ether-type epoxy resin) C-2: TETRAD (registered trademark)-X, produced by Mitsubishi Gas Chemical Company, Inc. (glycidyl amine-type epoxy resin) C-3: Sumidur N (registered trademark) 3300, produced by Covestro (multifunctional isocyanate).

**Table 2-1**

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Main agent | | Type | Main agent 1 | Main agent 2 | Main agent 3 | Main agent 4 | Main agent 5 | Main agent 6 | Main agent 7 | Main agent 8 | Main agent 9 | Main agent 10 | Main agent 11 |
| | | Parts by mass | 500 | 500 | 500 | 500 | 500 | 500 | 500 | 500 | 500 | 500 | 500 |
| Curing agent | | C-1 | 3.8 | 3.8 | 3.8 | 3.8 | 3.8 | 3.8 | 3.8 | 3.8 | 3.8 | 3.8 | 3.8 |
| | | C-2 | 0.5 | 0.5 | 0.5 | 0.5 | 0.5 | 0.5 | 0.5 | 0.5 | 0.5 | 0.5 | 0.5 |
| | | C-3 | | | | | | | | | | | |
| Laminating temperature (°C) | | | 100 | 100 | 100 | 100 | 100 | 80 | 80 | 80 | 80 | 80 | 80 |
| State | sea-island structure | Confirmation of structure | Sea-island | Sea-island | Sea-island | Sea-island | Sea-island | Sea-island | Sea-island | Sea-island | Sea-island | Sea-island | Sea-island |
| | | Maximum particle size (µm) | 0.4 | 0.3 | 0.5 | 1.1 | 1.2 | 0.4 | 0.4 | 0.3 | 0.7 | 1.4 | 1.3 |
| | | Minimum particle size (Nm) | 0.1 | 0.1 | 0.2 | 0.4 | 0.4 | 0.1 | 0.1 | 0.1 | 0.1 | 0.3 | 0.3 |
| Evaluation | Initial adhesion | Peel strength (N/cm) | 8.5 | 8.6 | 8.1 | 7.8 | 7.7 | 7.4 | 8.2 | 8.3 | 7.9 | 7.3 | 7.2 |
| | | Evaluation | A | A | A | B | B | C | A | A | B | C | C |
| | Electrolyt e solution resistance at 85°C | Peel strength (N/cm) after immersion | 8.4 | 8.6 | 8.3 | 7.9 | 7.7 | 7.8 | 8.2 | 8.2 | 8.0 | 7.5 | 7.5 |
| | | Evaluation | A | A | A | B | B | B | A | A | A | B | B |
| | Moldabilit y | Tensile elongation at break (%) | 280 | 280 | 270 | 250 | 250 | 330 | 310 | 320 | 300 | 280 | 280 |
| | | Evaluation | B | B | B | B | B | A | A | A | A | B | B |
| | | Limit molding depth (mm) | 5.8 | 5.8 | 5.4 | 5.0 | 5.0 | 6.4 | 6.1 | 6.3 | 6.0 | 5.8 | 5.7 |
| | | Evaluation | B | B | B | B | B | A | A | A | A | B | B |

**Table 2-2**

| | | | Example 12 | Example 13 | Example 14 | Example 15 | Example 16 | Example 17 | Example 18 | Comparative Example 1 | Comparative Example 2 | Comparative Example 3 | Comparative Example 4 |
|---|---|---|---|---|---|---|---|---|---|---|---|---|---|
| Main agent | | Type | Main agent 12 | Main agent 13 | Main agent 14 | Main agent 15 | Main agent 16 | Main agent 17 | Main agent 7 | Main agent 18 | Main agent 1 | Main agent 19 | Main agent 20 |
| | | Parts by mass | 500 | 500 | 500 | 500 | 500 | 500 | 500 | 500 | 500 | 500 | 500 |
| Curing agent | | C-1 | 3.8 | 3.8 | 3.8 | 3.8 | 3.8 | 3.8 | | 3.8 | 3.8 | 3.8 | 3.8 |
| | | C-2 | 0.5 | 0.5 | 0.5 | 0.5 | 0.5 | 0.5 | | 0.5 | 0.5 | 0.5 | 0.5 |
| | | C-3 | | | | | | | 5.0 | | | | |
| Laminating temperature (°C) | | | 80 | 80 | 80 | 80 | 80 | 80 | 80 | 80 | 80 | 80 | 100 |
| State | Sea-island structure | Confirmation of structure | Sea-island | Sea-island | Sea-island | Sea-island | Sea-island | Sea-island | Sea-island | Homogeneous | Separation | Separation | Separation |
| | | Maximum particle size (µm) | 0.4 | 0.6 | 0.4 | 0.3 | 0.3 | 1.2 | 0.4 | - | - | - | - |
| | | Minimum particle size (µm) | 0.1 | 0.1 | 0.1 | 0.1 | 0.1 | 0.3 | 0.1 | - | - | - | - |
| Evaluation | Initial adhesion | Peel strength (N/cm) | 8.2 | 7.8 | 8.2 | 7.7 | 7.5 | 7.5 | 8.0 | 8.2 | 5.4 | 7.2 | 7.7 |
| | | Evaluation | A | B | A | B | B | B | A | A | D | C | B |
| | Electrolyte solution resistance at 85°C | Peel strength (N/cm) after immersion | 8.2 | 7.8 | 8.2 | 7.6 | 7.8 | 7.5 | 7.9 | 8.1 | 5.1 | 7.2 | 7.8 |
| | | Evaluation | A | B | A | B | B | B | B | A | D | C | B |
| | Moldability | Tensile elongation at break (%) | 290 | 330 | 260 | 310 | 310 | 210 | 320 | 140 | 90 | 160 | 120 |
| | | Evaluation | B | A | B | A | A | C | A | D | D | D | D |
| | | Limit molding depth (mm) | 5.9 | 6.4 | 5.1 | 6.0 | 6.1 | 3.9 | 6.2 | 1.8 | 1.3 | 1.9 | 1.5 |
| | | Evaluation | B | A | B | A | A | C | A | D | D | D | D |

### Industrial Applicability

The adhesive composition according to the present invention has an sea-island structure, and comprises a reaction product of the modified polyolefin (A) and the curing agent (C) in a sea, and a reaction product of the thermoplastic resin (B) and the curing agent (C) in islands. Since the adhesive composition according to the present invention has a sea-island structure, the composition exhibits remarkable followability to a substrate, and has excellent processing properties such as deep drawability. Moreover, the adhesive composition according to the present invention shows good adhesion to a polyolefin resin substrate and a metal substrate, even under low-temperature bonding conditions; and has electrolyte solution resistance, even under high-temperature conditions. Thus, a laminate of a polyolefin resin substrate and a metal substrate formed using the adhesive composition of the present invention can be used for a wide variety of fields such as not only exterior panels of household electrical appliances, furniture materials, and building interior components, but also packaging materials (pouch-type) for lithium batteries used in personal computers, mobile phones, video cameras, etc.; and for applications in vehicles.

## Claims

1. An adhesive composition having a sea-island structure and comprising a reaction product of an acid-modified polyolefin (A) and a curing agent (C) in a sea, and a reaction product of a thermoplastic resin (B) and the curing agent (C) in islands,
wherein the percentage of islands having a particle size of 0.001 to 5 µm is 80% or more of the total number of islands per unit area of 10 µm × 10 um of the adhesive composition, determined as described in the description.

2. The adhesive composition according to claim 1,
wherein the acid-modified polyolefin (A) has an acid value of 2 to 50 mgKOH/g, determined as described in the description.

3. The adhesive composition according to claim 1 or 2,
wherein the acid-modified polyolefin (A) comprises propylene and 1-butene as olefin components, and the molar ratio of propylene/1-butene is 99 to 60/1 to 40.

4. The adhesive composition according to any one of claims 1 to 3, wherein the thermoplastic resin (B) is a styrene-based elastomer.

5. The adhesive composition according to any one of claims 1 to 4, wherein the thermoplastic resin (B) has an acid value of 2 to 50 mgKOH/g, determined as described in the description.

6. The adhesive composition according to any one of claims 1 to 5, wherein the content of the thermoplastic resin (B) is 5 to 30 parts by mass, based on 100 parts by mass of the acid-modified polyolefin (A).

7. The adhesive composition according to any one of claims 1 to 6, wherein the curing agent (C) is an epoxy curing agent or an isocyanate curing agent.

8. The adhesive composition according to any one of claims 1 to 7, wherein the content of the curing agent (C) is 0.5 to 40 parts by mass, based on 100 parts by mass of the acid-modified polyolefin (A).

9. The adhesive composition according to any one of claims 1 to 8, wherein the acid-modified polyolefin (A) comprises an acid-modified polyolefin (A1) having a melting point of 50 to 155°C, and an acid-modified polyolefin (A2) having a melting point of 55 to 160°C.

10. The adhesive composition according to claim 9, wherein the mass ratio of the acid-modified polyolefin (A1)/the acid-modified polyolefin (A2) is 99 to 21/1 to 79.

11. A laminate comprising the adhesive composition according to any one of claims 1 to 10 laminated on at least one surface of a substrate.

12. The laminate according to claim 11, wherein the substrate is a polyolefin substrate or a metal substrate.

13. A packaging material for a lithium-ion battery, comprising the laminate according to claim 12 as a constituent member.

## Patentansprüche

1. Eine Klebstoffzusammensetzung, die eine See-Insel-Struktur aufweist und ein Reaktionsprodukt eines säuremodifizierten Polyolefins (A) und eines Härtungsmittels (C) in einer See und ein Reaktionsprodukt eines thermoplastischen Harzes (B) und des Härtungsmittels (C) in Inseln umfasst,
wobei der Prozentsatz an Inseln mit einer Teilchengröße von 0,001 bis 5 µm 80% oder mehr der Gesamtzahl an Inseln pro Flächeneinheit von 10 µm × 10 µm der Klebstoffzusammensetzung, bestimmt wie in der Beschreibung beschrieben, beträgt.

2. Die Klebstoffzusammensetzung nach Anspruch 1, wobei das säuremodifizierte Polyolefin (A) eine Säurezahl von 2 bis 50 mgKOH/g, bestimmt wie in der Beschreibung beschrieben, aufweist.

3. Die Klebstoffzusammensetzung nach Anspruch 1 oder 2, wobei das säuremodifizierte Polyolefin (A) Propylen und 1-Buten als Olefinkomponenten umfasst und das Molverhältnis von Propylen/1-Buten 99 bis 60/1 bis 40 beträgt.

4. Die Klebstoffzusammensetzung nach einem der Ansprüche 1 bis 3, wobei das thermoplastische Harz (B) ein Elastomer auf Styrolbasis ist.

5. Die Klebstoffzusammensetzung nach einem der Ansprüche 1 bis 4, wobei das thermoplastische Harz (B) eine Säurezahl von 2 bis 50 mgKOH/g, bestimmt wie in der Beschreibung beschrieben, aufweist.

6. Die Klebstoffzusammensetzung nach einem der Ansprüche 1 bis 5, wobei der Gehalt des thermoplastischen Harzes (B) 5 bis 30 Massenteile, bezogen auf 100 Massenteile des säuremodifizierten Polyolefins (A), beträgt.

7. Die Klebstoffzusammensetzung nach einem der Ansprüche 1 bis 6, wobei das Härtungsmittel (C) ein Epoxidhärtungsmittel oder ein Isocyanathärtungsmittel ist.

8. Die Klebstoffzusammensetzung nach einem der Ansprüche 1 bis 7, wobei der Gehalt des Härtungsmittels (C) 0,5 bis 40 Massenteile, bezogen auf 100 Massenteile des säuremodifizierten Polyolefins (A), beträgt.

9. Die Klebstoffzusammensetzung nach einem der Ansprüche 1 bis 8, wobei das säuremodifizierte Polyolefin (A) ein säuremodifiziertes Polyolefin (A1) mit einem Schmelzpunkt von 50 bis 155°C und ein säuremodifiziertes Polyolefin (A2) mit einem Schmelzpunkt von 55 bis 160°C umfasst.

10. Die Klebstoffzusammensetzung nach Anspruch 9, wobei das Massenverhältnis des säuremodifizierten Polyolefins (A1)/des säuremodifizierten Polyolefins (A2) 99 bis 21/1 bis 79 beträgt.

11. Ein Laminat, umfassend die Klebstoffzusammensetzung nach einem der Ansprüche 1 bis 10, laminiert auf mindestens eine Oberfläche eines Substrats.

12. Das Laminat nach Anspruch 11, wobei das Substrat ein Polyolefinsubstrat oder ein Metallsubstrat ist.

13. Ein Verpackungsmaterial für eine Lithium-Ionen-Batterie, umfassend das Laminat nach Anspruch 12 als ein konstituierendes Element.

## Revendications

1. Composition adhésive ayant une structure mer-îlots et comprenant un produit de réaction d'une polyoléfine modifiée par un acide (A) et d'un agent de durcissement (C) dans une mer, et un produit de réaction d'une résine thermoplastique (B) et de l'agent de durcissement (C) dans des îlots,
dans laquelle le pourcentage d'îlots ayant une taille de particule de 0,001 à 5 µm est de 80 % ou plus du nombre total d'îlots par unité de surface de 10 µm × 10 µm de la composition adhésive, déterminé comme décrit dans la description.

2. Composition adhésive selon la revendication 1, dans laquelle la polyoléfine modifiée par un acide (A) a un indice d'acide de 2 à 50 mg de KOH/g, déterminé comme décrit dans la description.

3. Composition adhésive selon la revendication 1 ou 2, dans laquelle la polyoléfine modifiée par un acide (A) comprend du propylène et du 1-butène comme composants oléfiniques, et le rapport molaire propylène/1-butène est de 99 à 60/1 à 40.

4. Composition adhésive selon l'une quelconque des revendications 1 à 3, dans laquelle la résine thermoplastique (B) est un élastomère à base de styrène.

5. Composition adhésive selon l'une quelconque des revendications 1 à 4, dans laquelle la résine thermoplastique (B) a un indice d'acide de 2 à 50 mg de KOH/g, déterminé comme décrit dans la description.

6. Composition adhésive selon l'une quelconque des revendications 1 à 5, dans laquelle la teneur en résine thermoplastique (B) est de 5 à 30 parties en masse, sur la base de 100 parties en masse de la polyoléfine modifiée par un acide (A).

7. Composition adhésive selon l'une quelconque des revendications 1 à 6, dans laquelle l'agent de durcissement (C) est un agent de durcissement époxy ou un agent de durcissement isocyanate.

8. Composition adhésive selon l'une quelconque des revendications 1 à 7, dans laquelle la teneur en agent de durcissement (C) est de 0,5 à 40 parties en masse, sur la base de 100 parties en masse de la polyoléfine modifiée par un acide (A).

9. Composition adhésive selon l'une quelconque des revendications 1 à 8, dans laquelle la polyoléfine modifiée par un acide (A) comprend une polyoléfine modifiée par un acide (A1) ayant un point de fusion de 50 à 155°C, et une polyoléfine modifiée par un acide (A2) ayant un point de fusion de 55 à 160°C.

10. Composition adhésive selon la revendication 9, dans laquelle le rapport massique de la polyoléfine modifiée par un acide (A1)/la polyoléfine modifiée par un acide (A2) est de 99 à 21/1 à 79.

11. Stratifié comprenant la composition adhésive selon l'une quelconque des revendications 1 à 10 stratifiée sur au moins une surface d'un substrat.

12. Stratifié selon la revendication 11, dans lequel le substrat est un substrat polyoléfinique ou un substrat métallique.

13. Matériau d'emballage pour batterie lithium-ion, comprenant le stratifié selon la revendication 12 comme élément constitutif.
